(19) Europäisches Patentamt
European Patent Office
Office européen des brevets

(11) **EP 2 781 483 B1**

(12) **EUROPEAN PATENT SPECIFICATION**

(45) Date of publication and mention
of the grant of the patent:
**23.05.2018 Bulletin 2018/21**

(51) Int Cl.:
*C01B 25/45* (2006.01)   *H01M 4/136* (2010.01)
*H01M 4/36* (2006.01)   *H01M 4/58* (2010.01)
*H01M 4/583* (2010.01)   *H01M 4/02* (2006.01)
*H01M 10/052* (2010.01)

(21) Application number: **12849309.5**

(22) Date of filing: **14.11.2012**

(86) International application number:
**PCT/JP2012/079484**

(87) International publication number:
**WO 2013/073562 (23.05.2013 Gazette 2013/21)**

(54) **COMPOSITE PARTICLES, METHOD FOR PRODUCING SAME, ELECTRODE MATERIAL FOR SECONDARY BATTERIES, AND SECONDARY BATTERY**

VERBUNDTEILCHEN, HERSTELLUNGSVERFAHREN DAFÜR, ELEKTRODENMATERIAL FÜR SEKUNDÄRBATTERIEN UND SEKUNDÄRBATTERIE

PARTICULES COMPOSITES, LEUR PROCÉDÉ DE PRODUCTION, MATÉRIAU D'ÉLECTRODE POUR BATTERIES SECONDAIRES, ET BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2011   JP 2011250184**

(43) Date of publication of application:
**24.09.2014   Bulletin 2014/39**

(73) Proprietors:
• **Denka Company Limited**
  **Tokyo 103-8338 (JP)**
• **Sei Corporation**
  **Tsu-city, Mie Prefecture 5141118 (JP)**

(72) Inventors:
• **KAWASAKI, Takashi**
  **Machida-shi**
  **Tokyo 194-8560 (JP)**
• **YOSHINO, Nobuyuki**
  **Omuta-shi**
  **Fukuoka 836-8510 (JP)**
• **MURATA, Hiroshi**
  **Machida-shi**
  **Tokyo 194-8560 (JP)**
• **SAWAI, Takehiko**
  **Tsu-city**
  **Mie 514-1118 (JP)**
• **SAITO, Shinji**
  **Tsu-city**
  **Mie 514-1118 (JP)**
• **URAO, Kazunori**
  **Tsu-city**
  **Mie 514-1118 (JP)**

(74) Representative: **Gulde & Partner**
**Patent- und Rechtsanwaltskanzlei mbB**
**Wallstraße 58/59**
**10179 Berlin (DE)**

(56) References cited:
WO-A1-2007/034823   WO-A1-2010/047334
WO-A1-2010/112977   WO-A1-2011/072547
JP-A- 2007 022 894   JP-A- 2007 250 417
JP-A- 2011 100 592   JP-A- 2011 515 813
US-A1- 2010 119 949

• SEUNG-MIN OH ET AL: "Enhanced electrochemical performance of carbonLiMnFePOnanocomposite cathode for lithium-ion batteries", JOURNAL OF POWER SOURCES, ELSEVIER SA, CH, vol. 196, no. 16, 24 November 2010 (2010-11-24), pages 6924-6928, XP028226129, ISSN: 0378-7753, DOI: 10.1016/J.JPOWSOUR.2010.11.159 [retrieved on 2010-12-07]

- A. VADIVEL MURUGAN ET AL: "One-Pot Microwave-Hydrothermal Synthesis and Characterization of Carbon-Coated LiMPO[sub 4] (M=Mn, Fe, and Co) Cathodes", JOURNAL OF THE ELECTROCHEMICAL SOCIETY, vol. 156, no. 2, 1 January 2009 (2009-01-01), page A79, XP055179168, ISSN: 0013-4651, DOI: 10.1149/1.3028304
- URSZULA DETTLAFF-WEGLIKOWSKA ET AL: "Preparation and electrochemical characterization of LiMnPO 4 /single-walled carbon nanotube composites as cathode material for Li-ion battery", PHYSICA STATUS SOLIDI (B), vol. 246, no. 11-12, 1 December 2009 (2009-12-01), pages 2482-2485, XP055068447, ISSN: 0370-1972, DOI: 10.1002/pssb.200982290
- FEI DENG ET AL: "Synthesis of LiFePOvapor-grown carbon fiber (VGCF) composite cathode material via microwave pyrolysis chemical vapor deposition", CHINESE SCIENCE BULLETIN, SCIENCE IN CHINA PRESS, BE, vol. 56, no. 17, 25 May 2011 (2011-05-25), pages 1832-1835, XP019911219, ISSN: 1861-9541, DOI: 10.1007/S11434-010-4273-2
- MADHAV SINGH ET AL: "Polyol process for the synthesis of LiFePOrhombohedral particles", ADVANCED POWDER TECHNOLOGY, VSP, UTRECHT, NL, vol. 22, no. 2, 8 February 2011 (2011-02-08), pages 284-289, XP028384061, ISSN: 0921-8831, DOI: 10.1016/J.APT.2011.02.006 [retrieved on 2011-02-10]
- BHUVANESWARI,M. ET AL.: 'Synthesis and characterization of Carbon Nano Fiber/LiFeP04 composites for Li-ion batteries' J POWER SOURCES vol. 180, no. 1, 15 May 2008, pages 553 - 560, XP022612379
- DENG,F. ET AL.: 'Synthesis and electrochemical analyses of vapor-grown carbon fiber/pyrolytic carbon-coated LiFeP04 composite' J MATER SCI vol. 46, no. 18, September 2011, pages 5896 - 5902, XP019911219

## Description

## Technical Field

The present invention relates to a process of producing composite particles to be used in electrode materials for a lithium-ion secondary battery.

## Background Art

In a lithium-ion secondary battery, a negative electrode may be formed using material capable of storing and releasing a lithium ion. The lithium-ion secondary battery may have less precipitation of dendrites than a lithium secondary battery having a negative electrode made of metal lithium. Because of this, the lithium-ion secondary battery has advantages that a high-capacity battery with an increased energy density can be provided while a short circuit in the battery is prevented to increase its safety.

Recently, a much higher capacity of this lithium-ion secondary battery has been sought. At the same time, it is required for a cell for high-power usage that cell resistance is reduced to increase performance of charging and discharging a large current. In this respect, the following considerations have been conventionally given: to increase a capacity of carbon-based negative electrode material and/or positive electrode material made of lithium metal oxide, a cell reactant; to miniaturize reactant particles; to increase an electrode surface area by increasing a specific surface area of the particles and/or by designing a cell; and to reduce liquid diffusion resistance by making a separator thinner, etc. However, in one hand, the particles are made smaller and the specific surface area is increased, which causes an increase in an amount of a binder. On the other hand, this increase is inconsistent with making the capacity higher. Further, positive and negative electrode materials are peeled and detached from a metal foil, which is a collector. This results in a short circuit inside a cell. Consequently, cell voltage is lowered and uncontrolled heating occurs, etc., so that the lithium-ion secondary battery sometimes becomes unsafe. Then, consideration has been made to modify a type of the binder so as to increase adhesion to the foil (see Patent Literature 1).

However, the modification of the type of the binder may increase the cell capacity, but insufficiently improves characteristics of charging and discharging a large current by decreasing its resistance. When the lithium-ion secondary batteries are compared with secondary batteries such as a nickel-cadmium battery and a nickel-hydrogen battery, it is difficult to develop application to an electric tool and a hybrid car. This is because in the application, a large current should be charged and discharged in a long period of time, which provides a big performance barrier for the lithium-ion secondary batteries.

In view of charging and discharging a large current in the lithium-ion secondary battery, a carbon conductive material has been devised so as to decrease its electrode resistance (see Patent Literatures 2 to 4). Unfortunately, when a large current is used to repeat a cycle of charge and discharge, positive and negative electrode materials are subject to expansion and contraction, which damages a conductive path of particles between positive and negative electrodes. As a result, a large current cannot be made to flow after a short period of time.

Meanwhile, metal oxide such as $LiCoO_2$, $LiNiO_2$, $Li_2MnO_4$, or $LiCo_xNi_yMn_zO_2$ (x + y + z = 1) has been conventionally used as a positive electrode active substance for the lithium-ion secondary battery. Recently, much attention has been paid to lithium-containing phosphate such as $LiFePO_4$, $LiMnPO_4$, $LiMn_xFe_{(1-x)}PO_4$, $LiCoPO_4$, or $Li_3V_2(PO_4)_3$.

The first feature of the lithium-containing phosphate is that its anion is a polyanion (a phosphate ion: $PO_4^{3-}$), which is more stable than an oxide ion ($O^{2-}$). Differing from metal oxide, the lithium-containing phosphate generates no oxygen ($O_2$), which is a combustion-supporting substance, after decomposition. Accordingly, use of the lithium-containing phosphate as a positive electrode active substance can increase safety of the lithium-ion secondary battery.

The second feature of the lithium-containing phosphate is that resistance of the material itself is large. Consequently, it is a big issue to make the battery highly conductive (see Patent Literatures 5 and 6). In order to provide possible solutions, various considerations have been made: to coat the surface of particles of the lithium-containing phosphate with carbon, a conductive material, to prepare positive electrode material; or to make a composite of the lithium-containing phosphate and carbon, etc., (see Patent Literatures 7 to 13). These considerations have improved performance of the positive electrode material using phosphate. Non-Patent Literature 1, 2 and 3 disclose processes for producing composite particles involving coating a particles of lithium-containing phosphate with carbon material. The carbon material is a single-wall carbon nanotube SWNT (Non-Patent Literature 1), a vapor-grown fiber VGCF (Non-Patent Literature 2), or multi-wall carbon nanotube MWCNT (Non-Patent Literature 3).

**Citation List**

**Patent Literature**

Patent Literature 1: JP05-226004A
Patent Literature 2: JP2005-19399A
Patent Literature 3: JP2001-126733A
Patent Literature 4: JP2003-168429A
Patent Literature 5: JP2000-509193A
Patent Literature 6: JP09-134724A
Patent Literature 7: JP2002-75364A
Patent Literature 8: JP2002-110162A
Patent Literature 9: JP2004-63386A
Patent Literature 10: JP2005-123107A
Patent Literature 11: JP2006-302671A
Patent Literature 12: JP2007-80652A
Patent Literature 13: JP2010-108889A
Patent Literature 14: JP2009-503182A
Non-Patent Literature 1: Ursula Dettlaff-Weglikowska et al., Physica Status Solidi (B) Vol. 246, No. 11-12 (2009), 2482-2485
Non-Patent Literature 2: Fei Deng et al., Chinese Science Bulletin, Science in China Pres, BE, Vol. 56, No. 17 (2011), 1832-1835
Non-Patent Literature 3: Madhav Singh et al., Advanced Powder Technology, Vol. 22, No. 2 (2011), 284-289

## SUMMARY OF INVENTION

### Technical Problem

The above carbon coating of the positive electrode active substance may enhance electron conductivity. However, when contraction and expansion of the positive electrode active substance are repeated during cycles of charge and discharge, an electrical contact between the carbon coating and its surrounding conduction aid gradually deteriorates inside the positive electrode material. This likely causes a voltage drop and capacity reduction of a cell during a long period of the cycles. Accordingly, the above carbon coating has not radically improved the long-term cycle characteristics. Also, the above problems have not been resolved by a conventional technology in which lithium-containing phosphate and carbon are used to form a composite.

The present invention has been made to address the foregoing issues on positive electrode material for a lithium-ion secondary battery. It is an object of the present invention to provide process for producing composite particles suitable to be used in positive electrode materials for a lithium-ion secondary battery in which stable charge and discharge characteristics can be maintained over a long period of service life of the battery.

### Solution to Problem

Specifically, in order to solve the above problems, the present invention has the following aspects (1) or (2):

(1) A process for producing composite particles, the process comprising: a first step of subjecting to surface treatment at least one carbon material selected from the group consisting of (i) chain-like carbon material, selected from carbon black, acetylene black, and furnace black, and (ii) carbon material produced by linking together said chain-like carbon material and fibrous carbon material, selected from carbon nanotube, carbon nanofiber, vapor-grown carbon fiber, polyacrylonitrile-based carbon fiber, and pitch-based carbon fiber; the surface treatment being a method selected from an oxidation treatment, a method of using a surfactant and a method of using a polymer dispersant; a second step of dispersing and mixing the at least one surface-treated carbon material in a solution having dissolved in a solvent a lithium ion ($Li^+$), a phosphate ion ($PO_4^{3-}$), and a metal ion other than from lithium, and a heat-degradable carbon source compound; a third step of heating the mixture as a solution state; and a fourth step of drying and further heating the mixture to form composite particles, wherein each particle of lithium-containing phosphate is coated with carbon coating comprising the at least one carbon material and covering 90-100% of the particle surface.

(2) A process for producing the composite particles, the process comprising: a first step of subjecting to surface treatment at least one carbon material selected from the group consisting of (i) chain-like carbon material, selected from carbon black, acetylene black, and furnace black, and (ii) carbon material produced by linking together said chain-like carbon material and fibrous carbon material, selected from carbon nanotube, carbon nanofiber, vapor-grown carbon fiber, polyacrylonitrile-based carbon fiber, and pitch-based carbon fiber; the surface treatment being a method selected from an oxidation treatment, a method of using a surfactant and a method of using a polymer dispersant; a second step of heating a solution having dissolved in a solvent a lithium ion ($Li^+$), a phosphate ion ($PO_4^{3-}$), and a metal ion other than from lithium as a solution state to form particles of lithium-containing phosphate and/or particles of a precursor thereof; a third step of mixing the at least one surface-treated carbon material obtained in the first step, the particles obtained in the second step, and a heat-degradable carbon source compound; and a fourth step of heating the mixture to form composite particles, wherein each particle of lithium-containing phosphate is coated with carbon coating comprising the at least one carbon material and covering 90-100% of the particle surface.

In addition, the present invention preferably provides the following aspects:

(3) The process for producing composite particles according to the aspect (1) or (2), wherein the particles of lithium-containing phosphate are prepared by a step of heating a solution having dissolved in a solvent a lithium ion ($Li^+$), a phosphate ion ($PO_4^{3-}$), and a metal ion other than the lithium ion as a solution state to form the particles of lithium-containing phosphate and/or particles of a precursor thereof;

(4) The process for producing composite particles according to the aspect (1) to (3), wherein the solvent is water, alcohol, or a mixed solvent of water and alcohol;

(5) The process for producing composite particles according to any one of the aspects (1), (3) or (4), wherein a method using a pressured and heated solvent is used for the third step of the aspect (1) or the second step of the aspect (3);

(6) The process for producing composite particles according to any one of the aspects (1) to (5), wherein the fibrous carbon material is a carbon nanotube with an average fiber size of 5 to 200 nm;

(7) The process for producing composite particles according to any one of the aspects (1) to (6), wherein the chain-like carbon material is carbon black produced by linking, like a chain, primary particles with an average particle size of 10 to 100 nm;

(8) The composite particles according to any one of the aspects (1) to (7), wherein the lithium-containing phosphate is $LiFePO_4$, $LiMnPO_4$, $LiMn_XFe_{(1-X)}PO_4$, $LiCoPO_4$, or $Li_3V_2(PO_4)_3$;

(9) The composite particles according to any one of the aspects (1) to (8), wherein primary particles have an average size of 0.02 to 20 $\mu$m.

## Advantageous Effects of Invention

In use of electrode material for a lithium-ion secondary battery according to the present invention, particles of a positive electrode active substance contain at least one carbon material selected from the group consisting of (i) fibrous carbon material, (ii) chain-like carbon material, and (iii) carbon material produced by linking together fibrous carbon material and chain-like carbon material. As the first effect, this carbon material can enhance an electron conduction network, so that electrons can be smoothly transferred between lithium-containing phosphate particles and a conduction aid. Further, the at least one carbon material is included in the carbon coating of the particles of lithium-containing phosphate of the positive electrode active substance. As the second effect, this inclusion helps retain an electric contact between the at least one carbon material and the positive electrode active substance. Consequently, repeating contraction and expansion of the positive electrode active substance during cycles of charge and discharge fails to deteriorate the contact. These two effects help enhance cycle characteristics of the battery and enable stable charge and discharge characteristics to be maintained over a long period of service life of the battery.

## Description of Embodiments

The following details embodiments of the present invention.

The composite particles obtained by the processes of the present invention comprise: particles of lithium-containing phosphate; and carbon coating comprising at least one carbon material selected from the group consisting of (i) chain-like carbon material, selected from carbon black, acetylene black, and furnace black, and (ii) carbon material produced by linking together said chain-like carbon material and fibrous carbon material, selected from carbon nanotube, carbon nanofiber, vapor-grown carbon fiber, wherein each particle is coated with the carbon coating.

Examples of the fibrous carbon material include a carbon nanotube, carbon nanofiber, vapor-grown carbon fiber, polyacrylonitrile (PAN)-based carbon fiber, and pitch-based carbon fiber. Among them, a carbon nanotube with an average fiber size of 5 to 200 nm is preferable.

Examples of the chain-like carbon material include carbon black such as acetylene black (e.g., DENKA BLACK manufactured by DENKI KAGAKU KOGYO KABUSHIKI KAISHA) or furnace black (e.g., SUPER-P manufactured by TIMCAL GRAPHITE & CARBON, Inc.; Ketjenblack manufactured by Ketjen Black International Company). Among them, carbon black whose primary particles have an average size of 10 to 100 nm is preferable. Among the carbon black, particularly preferred is acetylene black.

Examples of a method for linking fibrous carbon material and chain-like carbon material include: but are not particularly limited to, a method for injecting fibrous carbon material during thermolysis of hydrocarbon to link the material and carbon black generated; a method for supplying and linking hydrocarbon containing a fibrous carbon-forming catalyst during thermolysis of acetylene gas and/or while acetylene gas is subjected to thermolysis (see Patent Literature 14); a method for dispersing fibrous carbon and carbon black into a liquid carbonization source such as hydrocarbon and alcohol to carbonize the liquid carbonization source by heating, etc., while keeping it in a liquid or gas phase; a method including: mixing beforehand a fibrous carbon-forming catalyst and carbon black; causing them to contact source gas for fibrous carbon; and linking the carbon black and the fibrous carbon while generating the fibrous carbon; and a method for linking fibrous carbon and carbon black by a mechanochemical process using a solid medium. Examples of the linking using a mechanochemical process include linking using a media mixing mill such as a bead mill, a vibrating mill, or a ball mill. For example, an SEM image can be examined to calculate an average fiber size of fibrous carbon material and an average particle size of primary particles of chain-like carbon material, which sizes may be a number average fiber size and a number average particle size, respectively. The average fiber size may be, for example, 5, 10, 15, 20, 30, 50, 100, 150, or 200 nm. The size may be between any two of the above values. The average particle size of primary particles of chain-like carbon material may be, for example, 10, 20, 30, 40, 50, 60, 70, 80, 90, or 100 nm. The size may be between any two of the above values.

In an embodiment of the present invention, lithium-containing phosphate may be phosphate capable of storing and releasing a lithium ion. Specific examples of the lithium-containing phosphate include $LiFePO_4$, $LiMnPO_4$, $LiMn_XFe_{(1-X)}PO_4$, $LiCoPO_4$, and $Li_3V_2(PO_4)_3$. Particularly preferred are $LiFePO_4$ and $LiMn_XFe_{(1-X)}PO_4$.

In an embodiment of the present invention, the composite particles have an average primary particle size of preferably 0.02 to 20 $\mu$m and more preferably 0.05 to 5 $\mu$m. When the particle size is smaller than the above, it is difficult to coat the lithium-containing phosphate with the carbon coating containing the above carbon material because the particles are too small. When the particle size is larger than that, the positive electrode material has a reduced number of the particles. Also, the positive electrode active substance and the conduction aid have a reduced number of their contacts. Accordingly, the advantageous effects of the present invention as described in paragraph (0011) cannot be sufficiently achieved. The average particle size may be, for example, 0.02, 0.05, 0.1, 0.5, 1, 2, 3, 4, 5, 10, 15, or 20 $\mu$m. The size may be between any two of the above values. This average particle size can be calculated by examining, for example, an SEM image and may be a number average particle size. In an embodiment of the present invention, the coating includes a state in which the entire surface of the coated particles is coated. This coating may be carried out using carbon coating to cover 90, 95, 98, 99, 99.5, 99.9, or 100% of the particle surface. This ratio may be between any two of the above values. The coating of the particles may be observed with an SEM.

Composite particles produced by coating particles of lithium-containing phosphate with carbon coating containing the above carbon material may be prepared by any of the following methods: (a) a method for mixing and heating the above surface-treated carbon material, source material for lithium-containing phosphate, and a heat-degradable carbon source compound; (b) a method for mixing and heating the above surface-treated carbon material, particles of lithium-containing phosphate as obtained by heating source material for the lithium-containing phosphate and/or particles of a precursor thereof, and a heat-degradable carbon source compound; and (c) a method for mixing and heating the above surface-treated carbon material, particles of lithium-containing phosphate, and a heat-degradable carbon source compound. Note that in the method (c), commercially available particles of lithium-containing phosphate (including carbon-coated particles) may be used.

The carbon material is subjected to surface treatment. This process is oxidation treatment or treatment using a surfactant or a polymer dispersant. Carbon material without surface treatment is unsuitable for the present invention because the material is unlikely to be incorporated in carbon coating during formation of the coating. In the oxidation treatment, an oxidizer is used on a surface of the above carbon material to introduce a hydroxyl group (-OH), a carbonyl group (>C=O), a carboxyl group (-COOH), or a functional group containing an ether bond or an ester bond. Specific examples of the oxidation treatment include: (i) heating the carbon material under an oxygen-containing atmosphere (gas phase oxidation); (ii) retaining the carbon material under an ozone-containing atmosphere or in an ozone-containing solution (ozone oxidation); (iii) heating the carbon material in a solution containing an oxidizing compound (e.g., sulfuric acid, nitric acid, perchloric acid, hydrogen peroxide, potassium permanganate, osmic acid); and (iv) subjecting the carbon material to treatment using a wet jet mill in water, an organic solvent containing a functional group such as a hydroxy group (-OH) or a carbonyl group (>C=O) (e.g., ethanol, isopropyl alcohol, methyl ethyl ketone, methyl isobutyl ketone), or a mixed solution thereof. For example, a Star Burst manufactured by SUGINO MACHINE LIMITED, a Nano Jet Pal manufactured by JOKOH, Inc., a Nano Maker manufactured by Advanced Nano Technology Co., Ltd., or a microfluidizer manufactured by Powrex Corp. is suitable for the wet jet mill processor. Note that an SEM may be used to examine whether or not the carbon material is present in the carbon coating. In a surface image of the composite particles observed using the SEM, each composite particle may have, for example, 5, 10, 20, 30, or 50 pieces of the carbon material or a part thereof in its carbon coating. This number may be any one of the above values or higher, or may be between any two of the above values.

The treatment using a surfactant refers to a method for mixing the above carbon material and a surfactant in a polar solvent such as water or alcohol. Examples of the surfactant include: anionic surfactants such as sodium dodecyl sulfate (SDS); cationic surfactants such as dodecyltrimethylammonium chloride ($C_{12}$TAC) or hexadecyltrimethylammonium bromide ($C_{16}$TAB); amphoteric surfactants such as cocamidopropyl betaine or cocamidopropyl hydroxybetaine; and nonionic surfactants such as polyvinyl alcohol or polyoxyethylene octylphenylether (product name: Triton X-100). Note that paragraphs (0015) and (0028) of Patent Literature 10 (JP2005-123107A) disclose acetone as an example of a surfactant. When acetone is used as the surfactant, however, an object of the present invention cannot be achieved because of its volatile nature. Thus, acetone is excluded from the surfactant of the present invention.

The treatment using a polymer dispersant refers to a method for mixing the above carbon material and a polymer dispersant in water or an organic solvent. Examples of the polymer dispersant include polyvinylpyrrolidone (PVP) and poly(allylamine hydrochloride) (PAH).

Examples of the source material for lithium-containing phosphate include: lithium carbonate ($Li_2CO_3$), lithium hydroxide monohydrate ($LiOH \cdot H_2O$), lithium sulfate monohydrate ($Li_2SO_4 \cdot H_2O$), lithium formate monohydrate ($Li(HCOO) \cdot H_2O$), and/or lithium nitrate ($LiNO_3$); ferric phosphate dihydrate ($FePO_4 \cdot 2H_2O$), ferrous oxalate dihydrate ($FeC_2O_4 \cdot 2H_2O$), ferric sulfate heptahydrate ($FeSO_4 \cdot 7H_2O$), and/or ferrous chloride tetrahydrate ($FeCl_2 \cdot 4H_2O$); and phosphoric acid ($H_3PO_4$), ammonium dihydrogen phosphate (($NH_4)H_2PO_4$) or ammonium monohydrogen phosphate (($NH_4)_2HPO_4$), and/or ammonium phosphate (($NH_4)_3PO_4$).

In addition, lithium manganese phosphate ($LiMnPO_4$) may be produced. In this case, as source material, manganese carbonate ($MnCO_3$), manganese dioxide ($MnO_2$), manganese sulfate monohydrate ($MnSO_4 \cdot H_2O$), manganese nitrate tetrahydrate ($Mn(NO_3)_2 \cdot 4H_2O$), and/or manganese acetate tetrahydrate (($CH_3COO)_2Mn \cdot 4H_2O$), for example, may be used to substitute the iron compound such as ferrous oxalate dihydrate, ferric phosphate dihydrate, ferric sulfate heptahydrate, and/or ferrous chloride tetrahydrate in the case of the lithium iron phosphate. Further, lithium manganese iron phosphate ($LiMn_XFe_{(1-X)}PO_4$) may be produced. In this case, source material for the lithium iron phosphate and source material for the lithium manganese phosphate may be used at the same time.

Furthermore, lithium cobalt phosphate ($LiCoPO_4$) may be produced. In this case, as source material, cobalt sulfate heptahydrate ($CoSO_4 \cdot 7H_2O$), for example, may be used to substitute the iron compound in the case of the lithium iron phosphate. Moreover, lithium vanadium phosphate ($Li_3V_2(PO_4)_3$) may be produced. In this case, as source material, divanadium pentoxide ($V_2O_5$) and/or vanadium oxide sulfate hydride ($VOSO_4 \cdot xH_2O$)(x = 3 to 4), for example, may be used to substitute the iron compound in the case of the lithium iron phosphate.

In an embodiment of the present invention, examples of the heat-degradable carbon source compound include glucose ($C_6H_{12}O_6$), sucrose ($C_{12}H_{22}O_{11}$), dextrin (($C_6H_{12}O_5)_n$), ascorbic acid ($C_6H_8O_6$), carboxymethyl cellulose, and coal pitch.

In an embodiment of the present invention, a mixer may be used for the mixing. Examples of the mixer include a tank with a mixer, a sonicator, and a homogenizer. In this case, water, alcohol, or a mixed solvent of water and alcohol is suitable for the solvent. Note that when a surfactant or a polymer dispersant is used for surface treatment, pretreatment may be carried out before the source material is mixed or treatment may be carried out at the same time when the source material is mixed.

In an embodiment of the present invention, it is preferable to perform a method for heating a solution having dissolved therein a lithium ion ($Li^+$), a phosphate ion ($PO_4^{3-}$), and a metal ion other than from lithium, and/or a heat-degradable carbon source compound, etc., as a solution state while stirring in a tank with a mixer, etc. The heating temperature is preferably from 60 to 100°C. In order to increase a reaction rate, however, it is preferable to use a method using a pressured and heated solvent at from 100 to 250°C (i.e., a hydrothermal synthesis method). In this case, the heating is carried out using a pressure-resistant vessel such as an autoclave. This heating temperature may be, for example, 60, 80, 100, 150, 200, or 250°C. The temperature may be between any two of the above values. In this case, depending on the need, a pH modifier such as ammonia ($NH_3$), phosphoric acid ($H_3PO_4$), or sulfuric acid ($H_2SO_4$) may be added to a solution having dissolved therein a lithium ion ($Li^+$), a phosphate ion ($PO_4^{3-}$), and a metal ion other than from lithium, and/or a heat-degradable carbon source compound, etc.

In an embodiment of the present invention, the final heating is preferably carried out *in vacuo* under an inert atmosphere, reducing atmosphere, or mixed atmosphere of an inert gas and a reducing gas to form composite particles coated with carbon coating containing carbon material. Examples of the inert gas include argon (Ar), helium (He), and nitrogen ($N_2$). Examples of the reducing gas include hydrogen ($H_2$) and ammonia ($NH_3$). The heating temperature is preferably from 400 to 900°C and more preferably from 500 to 800°C. This heating temperature may be, for example, 400, 450, 500, 550, 600, 650, 700, 750, 800, 850, or 900°C. The temperature may be between any two of the above values.

Composite particles according to an embodiment of the present invention, a conduction aid, and a binder may be mixed to form an electrode material for a lithium-ion secondary battery. Examples of the conduction aid used include: carbon black such as acetylene black or furnace black, and/or a carbon nanotube or carbon nanofiber. Polyvinylidene fluoride (PVDF) may be used as the binder. With regard to a mixing ratio in an embodiment of the present invention, the composite particles have, for example, 60 to 95% by mass and the remainder consists of the conduction aid and the binder. When the composite particles are less than 60% by mass, the lithium-ion secondary battery has a reduced charge/discharge capacity. In addition, when the composite particles are more than 95% by mass, the amount of the conduction aid is insufficient. This increases the electric resistance of a positive electrode. In addition, the insufficient amount of the binder causes insufficient firmness of the positive electrode. Unfortunately, this results in a problem that the positive electrode material is likely to detach from a collector (mostly made of aluminum) during charge and discharge.

In an embodiment of the present invention, a positive electrode material is used for a positive electrode formed on a collector and the positive electrode may be used for a lithium-ion secondary battery. Examples of other components used for the lithium-ion secondary battery include a separator, an electrolytic solution, and a negative electrode material. The separator electrically insulates the positive electrode from the negative electrode and helps retain the electrolytic solution. Separators made of synthetic resin such as polyethylene and polypropylene may be used. In order to increase retention of the electrolytic solution, a porous film is preferably used for the separators.

In addition, in a lithium secondary battery using a positive electrode according to an embodiment of the present invention, a lithium salt-containing nonaqueous electrolytic solution or ion conductive polymer may be preferably used as an electrolytic solution in which a group of the electrodes is soaked. Examples of a nonaqueous solvent for a nonaqueous electrolyte in the lithium salt-containing nonaqueous electrolytic solution include ethylene carbonate (EC), propylene carbonate (PC), diethyl carbonate (DEC), dimethyl carbonate (DMC), and methylethyl carbonate (MEC). In addition, examples of the lithium salt capable of being dissolved in the above nonaqueous solvent include lithium hex-afluorophosphate ($LiPF_6$), lithium tetrafluoroborate ($LiBF_4$), and lithium trifluoromethanesulfonate ($LiSO_3CF_3$).

A preferable active substance of a negative electrode is a material that can reversibly store and release a Li ion in the same manner as in the case of the positive electrode, has poor reactivity with the electrolyte, and has a less redox potential than the positive electrode material. Examples include graphite, lithium titanate, silicon (Si), and tin (Sn). Two or more of them may be combined depending on the need. These compounds may be combined with a conduction aid and a binder in the same manner as in the case of the positive electrode, and may be practically used as a negative electrode material formed on a collector (in the case of the negative electrode, copper is mainly used).

The material members disclosed in paragraphs (0027) to (0029) are combined. Then, in order to prevent damage, deformation, and contact with an ambient air, the members are sealed in a container to form a lithium-ion secondary battery. The shape and material of the container are appropriately selected depending on its usage. For example, when charge and discharge characteristics, for example, are tested in a simple way, it is preferable to form a coin cell using a disk container made of metal such as stainless for sealing.

A high capacity and long service life may be required for industrial or consumer use. In this case, a positive electrode material, a separator, and a negative electrode material are alternately wound to form a wound cell using a metal cylinder-type or rectangular-type container for sealing. In the case of intermediate usage, a positive electrode material, a separator, and a negative electrode material are alternately stacked to form a laminated cell (aluminum pouch cell) using an aluminum-laminated package, etc., for sealing.

**Examples**

The following details composite particles, a process for producing the same, electrode material for a secondary battery and a secondary battery according to the present invention by referring to Examples and Comparative Examples. The present invention, however, is not limited to the following Examples without departing from the scope of the present invention.

Examples 1 to 7

(Surface Treatment of Carbon Material)

Tables 1 and 2 list carbon materials used for treatment and treatment methods. Note that organic functional groups introduced onto a surface of the carbon materials by oxidation treatment were determined by temperature-programmed desorption gas chromatography/mass spectrometry (a TDS-GC/MS method) using a temperature-programmed desorption device (Double-Shot Pyrolyzer 7683B manufactured by Agilent Technologies Inc.), gas chromatography equipment (HP6890 manufactured by Hewlett-Packard Development Company, L.P.), and a mass spectrometer (5973 manufactured by Hewlett-Packard Development Company, L.P.). Qualitative analysis was performed by examining whether or not there were mass spectral peaks of water (mass number = 18), carbon monoxide (mass number = 28), and carbon dioxide (mas number = 44). Note that a mass spectrum detected below 200°C was considered to be due to detachment of adsorbed gas. Accordingly, the mass spectrum was neglected. In addition, the same condition as of the temperature-programmed desorption device (i.e., heating *in vacuo* at a temperature increasing rate of 25°C/min from 200°C to 1000°C) was applied to heat 10 g of the carbon materials in an electric furnace and to determine a change in mass before and after the heating. The following equation was used to calculate an amount of decrease in mass and the amount was defined as a content of the organic functional groups.

$$[\text{Organic functional group content (\% by mass)}] = [\{(\text{Mass of carbon material after heating at 200°C}) - (\text{Mass of carbon material after heating at 1000°C}\} / (\text{Mass of carbon material after heating at 200°C})] \times 100$$

[Table 1]

Table 1

| Example | Carbon Material | Product Name | Manufacturer | Average Fiber Size or Average Primary Particle Size | Carbon Material Linking Method | Carbon Material Linking Conditions | | Surface Treatment Method | Surface Treatment | Condition | Organic Functional Group Type* | Amount of Organic Functional Group |
|---|---|---|---|---|---|---|---|---|---|---|---|---|
| 1 | Carbon nanofiber | CNF-T | Mitsubishi Materials Electronic Chemicals Co., Ltd. | 15nm | - | - | - | Oxidation treatment (Adding nitric acid while heating in sulfuric acid) | CNF-T : 500g Sulfuric acid : 5L 60% Nitric acid : 1.8L | 100°C 3 hour stirring | -OH >C=O -COOH | 1.2% by mass |
| 2 | Acetylene black | HS-100 | DENKI KAGAKU KOGYO KABUSHIKI KAISHA | 60nm | - | - | - | Treatment with polymer dispersant polyvinylpyrrolidone (PVP) | HS-100 : 500g PVP(K-30 manufactured by NIPPON SHOKUBAI CO.,LTD.): 50g Distilled water: 10L | 60°C 6 hour stirring | - | - |
| 3 | Particles produced by linking carbon nanofiber and acetylene black | CNF-T Acetylene black | Mitsubishi Materials Electronic Chemicals Co., Ltd. (CNF-T) (Acetylene black : generated from $C_2H_2$ gas) | 15nm (CNF-T average fiber size) 50nm (Acetylene black average primary particle size) | Powder CNF-T was injected into AB-generating site to precipitate AB on NF-T surface | CNF-T feed rate : 500g/hr $C_2H_2$ feed rate : 30L/min $N_2$(dilution gas) feed rate : 400L/min | 2000°C 1hr | Treatment with surfactant polyoxyethylene octylphenylether (TritonX-100) | Particles produced by linking CNF-T and acetylene black: 500g TritonX-100 (manufactured by Roche Applied Science) : 25mL Distilled water: 10L | 30°C 2 hour stirring | - | - |

EP 2 781 483 B1

(continued)

| Example | Carbon Material | Product Name | Manufacturer | Average Fiber Size or Average Primary Particle Size | Carbon Material Linking Method | Carbon Material Linking Conditions | | Surface Treatment Method | Surface Treatment | Condition | Organic Functional Group Type* | Amount of Organic Functional Group |
|---|---|---|---|---|---|---|---|---|---|---|---|---|
| 4 | Particles produced by linking carbon nanofiber and acetylene black | Carbon nanofiber | (Carbon nanofiber: generated from CO gas) | 20nm (Carbon nanofiber average fiber size) | AB was injected into carbon nanofiber-generating site to precipitate carbon nanofiber on AB surface | AB : 30g Cobalt oxide powder (Sigma-Aldrich 637025 ; Particle size 50nm or less) : 1g CO feed rate: 1.6L/min | 600°C 3hr | Treatment with surfactant sodium dodecyl sulfate (SDS) | Particles produced by linking carbon nanofiber and AB: 60g | 30°C 2 hour stirring | - | - |
| | AB | DENKI KAGAKU KOGYO KABUSHIKI KAISHA(AB) | | 40nm (AB average primary particle size) | | $H_2$ feed rate : 0.6L/min $N_2$(dilution gas) feed rate : 0.8L/min | | | SDS(Sigma-Aldrich 71717) : 5g Distilled water: 1L | | | |

*Regarding types of organic functional groups, $H_2O$, CO, and $CO_2$ detected by TDS-GC/MS method were presumed to be attributed to -OH, >C=O, and -COOH groups, respectively.

[Table 2]

Table 2

| Example | Carbon Material | Product Name | Manufacturer | Average Fiber Size or Average Primary Particle Size | Carbon Material Linking Method | Carbon Material Linking Conditions | | Surface Treatment Method | Surface Treatment Condition | | Organic Functional Group Type* | Amount of Organic Functional Group |
|---|---|---|---|---|---|---|---|---|---|---|---|---|
| 5 | Particles produficed by linking carbon nanofiber (two kinds) and acetylene black | VGCF-H | SHOWA DENKO K.K. (VGCF-H) | 150nm (VGCF-H average fiber size) | Mixing with wet vibrating mill | VGCF-H : 25g CNF-T : 25g HS-100 : 50g Ethanol: 1L $Al_2O_3$ ball : 1kg | Mixing period: 1hr | Oxidation treatment (Treatment using wet jet mill [Star Burst manufactured by SUGINO MACHINE LIMITED]) | Particles produced by linking VGCF-H/CNF-T/ Acetylene black : 100g Ethanol: 1L (using post-mixing solution as it was) | 30°C Ejecting pressure : 180MPa The number of ejecting paths : 5 | -OH >C=O -COOH | 1.0% by mass |
| | | CNF-T | Mitsubishi Materials Electronic Chemicals Co., Ltd.(CNF-T) | 15nm (CNF-T average fiber size) | | | | | | | | |
| | | HS-100 | DENKI KAGAKU KOGYO KABUSHIKI KAISHA(HS-100) | 60nm (HS-100 average primary particle size) | | | | | | | | |

| Example | Carbon Material | Product Name | Manufacturer | Average Fiber Size or Average Primary Particle Size | Carbon Material Linking Method | Carbon Material Linking Conditions | | Surface Treatment Method | Surface Treatment Condition | | Organic Functional Group Type* | Amount of Organic Functional Group |
|---|---|---|---|---|---|---|---|---|---|---|---|---|
| 6 | Particles produced by linking carbon nanofiber and acetylene black | CNF-T | Mitsubishi Materials Electronic Chemicals Co., Ltd. | 15nm (CNF-T average fiber size) | Mixing with wet vibrating mill | CNF-T: 20g HS-100: 80g Ethanol: 1L Al$_2$O$_3$ ball: 1kg | Mixing period : 1hr | Oxidation treatment (Stirring in ozone-containing water) | Particles produced by linking CNF-T/HS-100 : 100g Ozone level: 50ppm Distilled water: 2L | 30°C 6 hour stirring | -OH >C=O -COOH | 1.8% by mass |
| | | HS-100 | DENKI KAGAKU KOGYO KABUSHIKI KAISHA | 60nm (HS-100 average primary particle size) | | | | | | | | |

| Example | Carbon Material | Product Name | Manufacturer | Average Fiber Size or Average Primary Particle Size | Carbon Material Linking Method | Carbon Material Linking Conditions | | Surface Treatment Method | Surface Treatment Condition | | Organic Functional Group Type* | Amount of Organic Functional Group |
|---|---|---|---|---|---|---|---|---|---|---|---|---|
| 7 | Fumace black | Super-P | TIMCAL Inc. | 40nm | - | - | - | Treatment with polymer dispersant poly (allylamine hydrochloride) (PAH) | Super-P : 300g PAH (Sigma-Aldrich 283215, average molecular weight: 15000) : 20g Distilled water : 10L | 40°C 6 hour stirring | - | - |

*Regarding types of organic functional groups, $H_2O$, CO, and $CO_2$ detected by TDS-GC/MS method were presumed to be attributed to -OH, >C=O, and -COOH groups, respectively.

EP 2 781 483 B1

Examples 8 to 10

(Mixing and Heating of Surface-treated Carbon Material, Source Material for Lithium-containing Phosphate, and Heat-degradable Carbon Source Compound)

The surface-treated carbon material as prepared in Examples 1 to 3, source material, and a carbon source compound were mixed and heated under conditions designated in Table 3.

[Table 3]

Table 3

| Example | Carbon Material | Source Material for Lithium-containing Phosphate•Solvent•Carbon Source Material, etc. | Mixing Method | Mixing Conditions | Heating Method | Heating Conditions |
|---|---|---|---|---|---|---|
| 8 | Example 1 : 10g | LiOH•H$_2$O(Sigma-Aldrich 402974) : 126g<br>FeSO$_4$•7H$_2$O(Sigma-Aldrich 44982) : 278g<br>(NH$_4$)$_2$HPO$_4$(Sigma-Aldrich 215996) : 10g<br>H$_3$PO$_4$(Sigma-Aldrich P5811) : 91g<br>Ascorbic acid (Sigma-Aldrich P5811) : 35g<br>Distilled water : 1L | Mixing with mixer | 30°C<br><br>1hr | Heating in autoclave while mixing with mixer (hydrothermal treatment) | 190°C<br><br>12hr |
| 9 | Example 2 : 10g | LiOH•H$_2$O(Sigma-Aldrich 402974) : 126g<br>MnSO$_4$ • H$_2$O(Sigma-Aldrich M7634) : 169g<br>(NH$_4$)$_2$HPO$_4$(Sigma-Aldrich 215996) : 10g<br>H$_3$PO$_4$(Sigma-Aldrich P5811) : 91g<br>Carboxymethyl cellulose (Grade A; NIPPON PAPER INDUSTRIES CHEMICAL Div.) : 30g<br>Distilled water : 0.7L<br>Ethanol : 0.3L | Mixing with mixer | 30°C<br><br>1hr | Heating in autoclave while mixing with mixer (hydrothermal treatment) | 170°C<br><br>12hr |

(continued)

| Example | Carbon Material | Source Material for Lithium-containing Phosphate•Solvent•Carbon Source Material, etc. | Mixing Method | Mixing Conditions | Heating Method | Heating Conditions |
|---|---|---|---|---|---|---|
| 10 | Example 3 : 10g | LiOH•$H_2O$(Sigma-Aldrich 402974) : 126g<br>$FeSO_4$ • $7H_2O$(Sigma-Aldrich 44982) : 93g<br>$MnSO_4$ • $H_2O$(Sigma-Aldrich M7634) : 113g<br>$(NH_4)_2HPO_4$(Sigma-Aldrich 215996) : 10g<br>$H_3PO_4$(Sigma-Aldrich P5811) : 91g<br>Glucose (Sigma-Aldrich 158968) : 20g<br>Distilled water : 1L | Mixing with mixer | 30°C<br><br>1hr | Heating in autoclave while mixing with mixer (hydrothermal treatment) | 190°C<br><br>12hr |
| *Method for drying after heating: Spray dry | | | | | | |

Examples 11 to 13

(Method for Forming Particles of Lithium-containing Phosphate and/or Particles of Precursor Thereof and Mixing of Surface-treated Carbon Material, Particles of Lithium-containing Phosphate and/or Particles of Precursor Thereof, and Carbon Source Compound)

Table 4 shows a method for forming particles of lithium-containing phosphate and/or particles of a precursor thereof from source material. The particles formed, the surface-treated carbon material, and a carbon source compound were mixed under conditions designated in Table 4.

Example 14

(Mixing of Surface-treated Carbon Material, Particles of Lithium-containing Phosphate, and Carbon Source Compound)

The surface-treated carbon material as prepared in Example 7, Particles of lithium-containing phosphate, and a carbon source compound were mixed under conditions designated in Table 4.

[Table 4]

Table 4

| Example | Method for Forming Particles of Lithium-containing Phosphate and/or Particles of Precursor Thereof | | | | | | Carbon Material Mixed | Carbon Source Compound Mixed | Mixing Method, etc. |
|---|---|---|---|---|---|---|---|---|---|
| | Source Material for Lithium-containing Phosphate • Solvent • Carbon Source Material | Mixing Method | Mixing Conditions | Heating Method | Heating Conditions | Particles Formed | | | |
| 11 | LiOH • $H_2O$ (Sigma-Aldrich 402974) : 126g CoSO$_4$ • 7H$_2$O (Sigma-Aldrich C6768) : 281g (NH$_4$)$_2$HPO$_4$ (Sigma-Aldrich 215996) : 10g H$_3$PO$_4$(Sigma-Aldrich P5811) : 91g Distilled water : 1L | Mixing with mixer | 30°C 1hr | Heating while mixing with mixer | 90°C 24hr | LiCoPO$_4$ Precursor (Hydrate) | Example 4: 10g | Sucrose (Sigma-Aldrich 84097) : 20g | A solution after heating at 90°C for 24 hr was filtered, washed, and dried in vacuo to produce powder. Then, 100 g of the powder recovered and carbon material were dispersed in 500 mL of distilled water while sucrose was added. The mixture was stirred in a tank with a mixer for 30 min, the mixture was dried with a spray dryer. |

EP 2 781 483 B1

| Example | Method for Forming Particles of Lithium-containing Phosphate and/or Particles of Precursor Thereof | | | | | | Carbon Material Mixed | Carbon Source Compound Mixed | Mixing Method, etc. |
|---|---|---|---|---|---|---|---|---|---|
| | Source Material for Lithium-containing Phosphate • Solvent • Carbon Source Material | Mixing Method | Mixing Conditions | Heating Method | Heating Conditions | Particles Formed | | | |
| 12 | $Li_2SO_4$•$H_2O$ (Sigma-Aldrich 62609) : 192g $VOSO_4$•$nH_2O$ (n=3~4) (Wako Pure Chemical Industries 227-01015) : 151g $(NH_4)_2HPO_4$ (Sigma-Aldrich215996) : 132g $H_2SO_4$ (Sigma-Aldrich320501) : 0.01g Distilled water : 1L | Mixing with mixer | 30°C 1hr | Heating in autoclave while mixing with mixer (hydrothermal treatment) | 190°C 12hr | $Li_3V_2(PO_4)_3$ | Example 5 : 10g | Glucose (Sigma-Aldrich 158968) : 20g | A solution after heating at 190°C for 12 hr was filtered, washed, and dried in vacuo to produce powder. Then, 100 g of the powder recovered and carbon material were dispersed in 500 mL of distilled water while glucose was added. After the mixture was stirred with a rotating homogenizer (Auto Mixer Model 20 manufactured by PRIMIX Corporation) for 30 min, the mixture was dried under reduced pressure while heated at 100°C. |

| Example | Method for Forming Particles of Lithium-containing Phosphate and/or Particles of Precursor Thereof | | | | | | Carbon Material Mixed | Carbon Source Compound Mixed | Mixing Method, etc. |
|---|---|---|---|---|---|---|---|---|---|
| | Source Material for Lithium-containing Phosphate • Solvent • Carbon Source Material | Mixing Method | Mixing Conditions | Heating Method | Heating Conditions | Particles Formed | | | |
| 13 | LiOH •$H_2O$ (Sigma-Aldrich 402974) : 126g FeSO$_4$•$7H_2O$ (Sigma-Aldrich 44982) : 278g (NH$_4$)$_2$HPO$_4$ (Sigma-Aldrich 215996) : 10g H$_3$PO$_4$(Sigma-Aldrich P5811) : 91g Distilled water : 1L | Mixing with mixer | 30°C 1hr | Heating in autoclave while mixing with mixer (hydrothermal treatment) | 190°C 12hr | LiFePO$_4$ | Example 6: 10g | Carboxymethyl cellulose (Grade A; NIPPON PAPER INDUSTRIES CHEMICAL Div.) : 20g | A solution after heating at 190°C for 12 hr was filtered, washed, and dried in vacuo to produce powder. Then, 100 g of the powder recovered and carbon material were dispersed in a mixed solution of 300 mL of distilled water and 200 ml of ethanol while CMC was added. After the mixture was stirred with a ultrasonic homogenizer (BRANSON Model 4020-800) for 30 min, the mixture was dried under reduced pressure while heated at 100°C. |
| 14 | LiFePO$_4$ (Phostech Lithium inc. P2) : 100g | - | - | - | - | - | Example 7 : 10g | Sucrose (Sigma-Aldrich 84097) . 20g | 100g of particles of LiFePO$_4$ and carbon material were dispersed in 500 mL of distilled water while sucrose was added. After the mixture was stirred with a rotating homogenizer (Auto Mixer Model 20 manufactured by PRIMIX Corporation) for 30 min, the mixture was dried under reduced pressure while heated at 100°C. |

EP 2 781 483 B1

Examples 15 to 21

(Further Heating)

The mixture containing the surface-treated carbon material, a lithium-containing phosphate precursor and/or lithium-containing phosphate, and a carbon source compound, which mixture was produced in Examples 8 to 14, was further heated under conditions designated in Table 5 to prepare composite particles according to an example of the present invention. The crystal phase of the composite particles was identified by powder X - ray diffraction (using an X-ray diffractometer RU-200A manufactured by Rigaku Corporation; an X-ray source: Cu-Ka; a voltage: 40 kV; a current: 30 mA). In addition, a scanning electron microscope (a scanning electron microscope (SEM) JSM-6301F manufactured by JEOL Ltd.; an acceleration voltage: 1 kV; magnification: 10,000 to 50,000 x) was used to measure an average primary particle size of the composite particles and to inspect whether or not the carbon material was included in the carbon coating on the particle surface.

[Table 5]

Table 5

| | Heated Mixture | Heating Temperature·Time | Heating Atmosphere | Crystal Phase of Product | Average Primary Particle Size | Presence of Carbon Material in Carbon Coating |
|---|---|---|---|---|---|---|
| Example 15 | Example 8: 100g was recovered | 800°C 1hr | In vacuo | $LiFePO_4$ | 0.1 $\mu$m | Yes |
| Example 16 | Example 9:100g was recovered | 600°C 3hr | $N_2$ | $LiMnPO_4$ | 0.5 $\mu$m | Yes |
| Example 17 | Example 10: 100g was recovered | 800°C 1hr | $N_2:H_2=7:3$ | $LiMn_{0.67}Fe_{0.33}PO_4$ | 0.1 $\mu$m | Yes |
| Example 1 8 | Example 11 :100g was recovered | 700°C 1hr | In vacuo | $LiCoPO_4$ | 0.05 $\mu$m | Yes |
| Example 19 | Example 12:100g was recovered | 800°C 2hr | $Ar:H_2=4:1$ | $Li_3V_2(PO_4)_3$ | 10 $\mu$m | Yes |
| Example 20 | Example 13:100g was recovered | 700°C 2hr | Ar | $LiFePO_4$ | 0.5 $\mu$m | Yes |
| Example 21 | Example 14:100g was recovered | 700°C 2hr | Ar | $LiFePO_4$ | 0.7 $\mu$m | Yes |
| Comparative Example 15 | Comparative Example 8: 100g was recovered | 800°C 1hr | In vacuo | $LiFePO_4$ | 0.1 $\mu$m | No |
| Comparative Example 16 | Comparative Example 9: 100g was recovered | 600°C 3hr | $N_2$ | $LiMnPO_4$ | 0.5 $\mu$m | No |
| Comparative Example 17 | Comparative Example 10: 100g was recovered | 800°C 1hr | $N_2:H_2=7: 3$ | $LiMn_{0.67}Fe_{0.33}PO_4$ | 0.1 $\mu$m | No |
| Comparative Example 18 | Comparative Example 11: 100g was recovered | 700°C 1hr | In vacuo | $LiCoPO_4$ | 0.05 $\mu$m | No |
| Comparative Example 19 | Comparative Example 12: 100g was recovered | 800°C 2hr | $Ar:H_2=4:1$ | $Li_3V_2(PO_4)_3$ | 10$\mu$m | No |
| Comparative Example 20 | Comparative Example 13: 100g was recovered | 700°C 2hr | Ar | $LiFePO_4$ | 0.5 $\mu$m | No |

| | Heated Mixture | Heating Temperature·Time | Heating Atmosphere | Crystal Phase of Product | Average Primary Particle Size | Presence of Carbon Material in Carbon Coating |
|---|---|---|---|---|---|---|
| Comparative Example 21 | Comparative Example 14: 100g was recovered | 700°C 2hr | Ar | LiFePO$_4$ | 0.7 $\mu$ m | No |

Comparative Examples 1 to 21

The carbon material was not subjected to surface treatment and the same as of Examples 1 to 21 applied to the other processes to prepare particles of Comparative Examples 15 to 21. Tables 5 to 9 show these conditions and results together.

[Table 6]

Table 6

| Comparative Example | Carbon Material | Product Name | Manufacturer | Average Fiber Size or Average Primary Particle Size | Carbon Material Linking Method | Carbon Material Linking Conditions | | Surface Treatment Method | Organic Functional Group Type* |
|---|---|---|---|---|---|---|---|---|---|
| 1 | Carbon nanofiber | CNF-T | Mitsubishi Materials Electronic Chemicals Co., Ltd. | 15nm | - | - | - | - | - |
| 2 | Acetylene black | HS-100 | DENKI KAGAKU KOGYO KABUSHIKI KAISHA | 60nm | - | - | - | - | - |
| 3 | Particles produced by linking carbon nanofiber and acetylene black | CNF-T Acetylene black | Mitsubishi Materials Electronic Chemicals Co., Ltd.(CNF-T) (Acetylene black : generated from C2H2 gas) | 15nm (CNF-T average fiber size) 50nm (Acetylene black average primary particle size) | Powder CNF-T was injected into AB-generating site to precipitate AB on CNF-T surface | CNF-T feed rate: 500g/hr $C_2H_2$ feed rate : 30L/min $N_2$ (dilution gas) feed rate : 400L/min | 2000° C1hr | - | - |

| Comparative Example | Carbon Material | Product Name | Manufacturer | Average Fiber Size or Average Primary Particle Size | Carbon Material Linking Method | Carbon Material Linking Conditions | | Surface Treatment Method | Organic Functional Group Type* |
|---|---|---|---|---|---|---|---|---|---|
| 4 | Particles produced by linking carbon nanofiber and acetylene black | Carbon nanofiber<br><br>AB | (Carbon nanofiber : generated from CO gas) :<br><br>DENKI KAGAKU KOGYO KABUSHIKI KAISHA(AB) | 20nm (Carbon nanofiber average fiber size) 40nm(AB average primary particle size) | AB was injected into carbon nanofiber-generating site to precipitate carbon nanofiber on AB surface | AB : 30g Cobalt oxide powder(Sigma-Aldrich 637025 ; Particle size 50nm or less) : 1g CO feed rate : 1.6L/min $H_2$ feed rate : 0.6L/min $N_2$ (dilution gas) feed rate : 0.8L/min | 600°C 3hr | - | - |
| 5 | Particles produced by linking carbon nanofiber (two kinds) and acetylene black | VGCF-H<br><br>CNF-T<br><br>HS-100 | SHOWA DENKO K.K. (VGCF-H)<br><br>Mitsubishi Materials Electronic Chemicals Co., Ltd.(CNF-T) DENKI KAGAKU KOGYO KABUSHIKI KAISHA(HS-100) | 150nm (VGCF-H average fiber size) 15nm(CNF-T average fiber size) 60nm(HS-100 average primary particle size) | Mixing with wet vibrating mill | VGCF-H: 25g CNF-T : 25g HS-100 : 50g<br><br>Ethanol : 1L $Al_2O_3$ ball : 1kg | Mixing period : 1hr | - | - |

26

(continued)

| Comparative Example | Carbon Material | Product Name | Manufacturer | Average Fiber Size or Average Primary Particle Size | Carbon Material Linking Method | Carbon Material Linking Conditions | | Surface Treatment Method | Organic Functional Group Type* |
|---|---|---|---|---|---|---|---|---|---|
| 5 | Particles produced by linking carbon nanofiber and acetylene black | CNF-T<br><br>HS-100 | Mitsubishi Materials Electronic Chemicals Co., Ltd.<br><br>DENKI KAGAKU KOGYO KABUSHIKI KAISHA | 15nm (CNF-T average fiber size)<br><br>60nm(HS-100 average primary particle size) | Mixing with wet vibrating mill | CNF-T: 20g<br>HS-100 : 80g<br>Ethanol : 1L<br>$Al_2O_3$ ball: 1kg | Mixing period : 1hr | - | - |
| 7 | Furnace black | Super-P | TIMCAL Inc. | 40nm | - | - | - | - | - |

*Regarding types of organic functional groups, $H_2O$, CO, and $CO_2$ detected by TDS-GC/MS method were presumed to be attributed to -OH, >C=O, and -COOH groups, respectively.

[Table 7]

Table 7

| Comparative Example | Carbon Material | Source Material for Lithium-containing Phosphate • Solvent • Carbon Source Material | Mixing Method | Mixing Conditions | Heating Method | Heating Conditions |
|---|---|---|---|---|---|---|
| 8 | Comparative Example 1 : 100g | LiOH• $H_2O$(Sigma-Aldrich 402974) : 126g FeSO$_4$•7H$_2$O(Sigma-Aldrich 44982) : 278g (NH$_4$)$_2$HPO$_4$(Sigma-Aldrich 215996) : 10g H$_3$PO$_4$(Sigma-Aldrich P5811) : 91g Ascorbic acid (Sigma-Aldrich P5811) : 35g Distilled water : 1L | Mixing with mixer | 30°C 1hr | Heating in autoclave while mixing with mixer (hydrothermal treatment) | 190°C 12hr |
| 9 | Comparative Example 2 : 10g | LiOH• H$_2$O(Sigma-Aldrich 402974) : 126g MnSO$_4$ • H$_2$O(Sigma-Aldrich M7634) : 169g (NH$_4$)$_2$HPO$_4$(Sigma-Aldrich 215996) : 10g H$_3$PO$_4$(Sigma-Aldrich P5811) : 91g Carboxymethyl cellulose (Grade A; NIPPON PAPER INDUSTRIES CHEMICAL Div.) : 30g Distilled water: 0.7L Ethanol : 0.3L | Mixing with mixer | 30°C 1hr | Heating in autoclave while mixing with mixer (hydrothermal treatment) | 170°C 12hr |
| 10 | Comparative Example 3 : 10g | LiOH•H$_2$O(Sigma-Aldrich 402974) : 126g FeSO$_4$•7H$_2$O(Sigma-Aldrich 44982) : 93g MnSO$_4$ •H$_2$O(Sigma-Aldrich M7634) : 113g (NH$_4$)$_2$HPO$_4$(Sigma-Aldrich 215996) : 10g H$_3$PO$_4$(Sigma-Aldrich P5811) : 91g Glucose (Sigma-Aldrich 158968) : 20g Distilled water : 1L | Mixing with mixer | 30°C 1hr | Heating in autoclave while mixing with mixer (hydrothermal treatment) | 190°C 12hr |
| *Method for drying after heating: Spray dry | | | | | | |

[Table 8]

Table 8

| Comparative Example | Method for Forming Particles of Lithium-containing Phosphate and/or Particles of Precursor Thereof | | | | | | | Carbon Material Mixed | Carbon Source Compound Mixed | Mixing Method, etc. |
|---|---|---|---|---|---|---|---|---|---|---|
| | Source Material for Lithium-containing Phosphate · Solvent · Carbon Source Material | Mixing Method | Mixing Conditions | Heating Method | Heating Conditions | Particles Formed | | | | |
| 11 | $LiOH \cdot H_2O$ (Sigma-Aldrich 402974) : 126g $CoSO_4 \cdot 7H_2O$ (Sigma-Aldrich C6768) : 281g $(NH_4)_2HPO_4$ (Sigma-Aldrich 215996) : 10g $H_3PO_4$ (Sigma-Aldrich P5811) : 91g Distilled water : 1L | Mixing with mixer | 30°C 1hr | Heating while mixing with mixer | 90°C 24hr | $LiCoPO_4$ Precursor (Hydrate) | Comparative Example 4 : 10g | Sucrose (Sigma-Aldrich 84097) : 20g | A solution after heating at 90°C for 24 hr was filtered, washed, and dried in vacuo to produce powder. Then, 100 g of the powder recovered and carbon material were dispersed in 500 mL of distilled water while sucrose was added. The mixture was stirred in a tank with a mixer for 30 min, the mixture was dried with a spray dryer. |

(continued)

| Comparative Example | Method for Forming Particles of Lithium-containing Phosphate and/or Particles of Precursor Thereof | | | | | | Carbon Material Mixed | Carbon Source Compound Mixed | Mixing Method, etc. |
|---|---|---|---|---|---|---|---|---|---|
| | Source Material for Lithium-containing Phosphate · Solvent · Carbon Source Material | Mixing Method | Mixing Conditions | Heating Method | Heating Conditions | Particles Formed | | | |
| 12 | $Li_2SO_4 \cdot H_2O$ (Sigma-Aldrich 62609) : 192g $VOSO_4 \cdot nH_2O$ (n=3~4) (Wako Pure Chemical Industries 227-01015) : 151g $(NH_4)_2HPO_4$ (Sigma-Aldrich215996) : 132g $H_2SO_4$(Sigma-Aldrich320501) : 0.01g Distilled water : 1L | Mixing with mixer | 30°C  1hr | Heating in autoclave while mixing with mixer (hydrothermal treatment) | 190°C  12hr | $Li_3V_2(PO_4)_3$ | Comparative Example 5 : 10g | Glucose (Sigma-Aldrich 158968) : 20g | A solution after heating at 190°C for 12 hr was filtered, washed, and dried in vacuo to produce powder. Then, 100 g of the powder recovered and carbon material were dispersed in 500 mL of distilled water while glucose was added. After the mixture was stirred with a rotating homogenizer (Auto Mixer Model 20 manufactured by PRIMIX Corporation) for 30 min, the mixture was dried under reduced pressure while heated at 100°C. |

| Comparative Example | Method for Forming Particles of Lithium-containing Phosphate and/or Particles of Precursor Thereof | | | | | | Carbon Material Mixed | Carbon Source Compound Mixed | Mixing Method, etc. |
|---|---|---|---|---|---|---|---|---|---|
| | Source Material for Lithium-containing Phosphate · Solvent · Carbon Source Material | Mixing Method | Mixing Conditions | Heating Method | Heating Conditions | Particles Formed | | | |
| 13 | LiOH·H$_2$O (Sigma-Aldrich 402974) : 126g FeSO$_4$·7H$_2$O (Sigma-Aldrich 44982) : 278g (NH$_4$)$_2$HPO$_4$ (Sigma-Aldrich 215996) : 10g H$_3$PO$_4$(Sigma-Aldrich P5811) : 91g Distilled water : 1L | Mixing with mixer | 30°C  1hr | Heating in autoclave while mixing with mixer (hydrothermal treatment) | 190°C  12hr | LiFePO$_4$ | Comparative Example 6 : 10g | Carboxymethyl cellulose (Grade A; NIPPON PAPER INDUSTRIES CHEMICAL Div.) : 20g | A solution after heating at 190°C for 12 hr was filtered, washed, and dried in vacuo to produce powder. Then, 100 g of the powder recovered and carbon material were dispersed in a mixed solution of 300 mL of distilled water and 200 ml of ethano! while CMC was added. After the mixture was stirred with a ultrasonic homogenizer (BRANSON Model 4020-800) for 30 min, the mixture was dried under reduced pressure while heated at 100°C. |

EP 2 781 483 B1

| Comparative Example | Method for Forming Particles of Lithium-containing Phosphate and/or Particles of Precursor Thereof | | | | | | Carbon Material Mixed | Carbon Source Compound Mixed | Mixing Method, etc. |
|---|---|---|---|---|---|---|---|---|---|
| | Source Material for Lithium-containing Phosphate · Solvent · Carbon Source Material | Mixing Method | Mixing Conditions | Heating Method | Heating Conditions | Particles Formed | | | |
| 14 | $LiFePO_4$ (Phostech Lithium inc. P2) : 160g | - | - | - | - | - | Comparative Example 7 : 10g | Sucrose (Sigma-Aldrich 84097) : 20g | 100g of particles of $LiFePO_4$ and carbon material were dispersed in 500 mL of distilled water while sucrose was added. After the mixture was stirred with a rotating homogenizer (Auto Mixer Model 20 manufactured by PRIMIX Corporation) for 30 min, the mixture was dried under reduced pressure while heated at 100°C. |

EP 2 781 483 B1

32

Examples 22 to 28

The composite particles of Examples 15 to 21, carbon as a conduction aid, and polyvinylidene fluoride (a KF polymer solution manufactured by KUREHA CORPORATION) as a binder were combined at predetermined ratios designated in Table 9. N-methylpyrrolidone (catalog No. 328634 manufactured by Sigma-Aldrich Co. LLC.) was added thereto as a dispersion solvent. Then, the mixture was kneaded to prepare a positive electrode combination (slurry). This combination was used as positive electrode material to manufacture a laminated cell. After that, its charge and discharge characteristics were evaluated. The following shows an example of a method for manufacturing a positive electrode and a laminated cell. First, the composite particles of Examples 15 to 21 were used as a positive electrode combination slurry. Next, an aluminum foil with a thickness of 20 $\mu$m was coated with this slurry and dried. Then, the foil was pressed and cut at 40 mm x 40 mm to prepare a positive electrode for a lithium secondary battery. Graphite (synthetic graphite MCMB6-28 manufactured by OSAKA GAS CO., Ltd.) was used for a negative electrode. Polyvinylidene fluoride as a binder was mixed at a predetermined ratio. Then, a slurry was prepared in the same manner as in the case of the positive electrode. Subsequently, a copper foil with a thickness of 10 $\mu$m was coated with this slurry and dried. After that, the foil was pressed and cut at 45 mm x 45 mm to manufacture a negative electrode for a lithium secondary battery. An olefin fiber nonwoven fabric with a size of 50 mm x 50 mm was used as a separator that electrically separate the positive electrode from the negative electrode. An electrolytic solution was a solution prepared by mixing EC (ethylene carbonate manufactured by Aldrich Inc.) and MEC (methylethyl carbonate manufactured by Aldrich Inc.) at a volume ratio of 30:70 and by dissolving lithium hexafluorophosphate (LiPF$_6$ manufactured by Stella Chemifa Corporation) at 1 mol/L in the solution. After terminals were connected to the positive and negative electrodes, the whole body was enclosed in an aluminum-laminated package to form a laminated cell with a size of 60 mm x 60 mm.

Discharge performance of the cell was tested as follows. First, a cell was initially charged. Next, its charge/discharge efficiency was verified to be at or near 100%. Then, a constant current was discharged at a current density of 0.7 mA/cm$^2$ until the voltage reached 2.1 V. At that time, the discharge capacity was measured. After that, the discharge capacity was divided by an amount of positive electrode active substance to calculate a capacity density (mAh/g). A current level that can charge and discharge this capacity (mAh) in 1 hour was defined as "1C".

After the initial charge and discharge, its charge was conducted at 4.2 V (4.8 V was used for Examples 25 and 26 and Comparative Examples 25 and 26)(at a constant current of 0.2C; terminated when a current was 0.05C). With regard to the discharge, a current level in each cycle was gradually increased from 0.2C, 0.33C, 0.5C, 1C, to 3C (at a constant current; terminated when the voltage was 2.1 V). A 10-min interval was placed between the cycles, and the cycle was then repeated while keeping a current level of 3C. A cycle characteristic was defined as a ratio of a charge/discharge capacity at cycle 1000 of 3C to a charge/discharge capacity at the initial cycle (0.2C). Further, I-V characteristics at a SOC (charge depth) of 50% were used to calculate direct current resistance (DCR) of the cell. The direct current resistance during charge was defined as "charge DCR" and the direct current resistance during discharge was defined as "discharge DCR". Table 9 lists these results.

Comparative Examples 22 to 28

Except using the composite particles of Comparative Examples 15 to 21 as alternatives for those of Examples 15 to 21, the same procedure as in Examples 22 to 28 was applied to form a laminated cell. Then, the discharge performance of the cell was tested. Table 9 shows the results.

[Table 9]

Table 9

| Composite Particles Used | Positive Electrode Combination | Negative Electrode Combination | Capacity Density (mAh/g) | 3C/0.2C Cycle Characteristic (%) | Charge DCR (mΩ) | Discharge DCR (mΩ) |
|---|---|---|---|---|---|---|
| Example 22 | Composite particles : 85% by mass<br>Conduction aid*1 : 9% by mass<br>Binder*2 : 6% by mass | Graphite : 94% by mass<br>Conduction aid*3 : 1% by mass<br>Sinder*4 : 5% by mass | 155 | 91 | 1190 | 1322 |
| Example 23 | | | 80 | 74 | 2468 | 2525 |
| Example 24 | | | 125 | 81 | 1812 | 1834 |
| Example 25 | | | 135 | 87 | 1210 | 1367 |
| Example 26 | | | 130 | 71 | 1688 | 1789 |
| Example 27 | | | 150 | 78 | 1312 | 1444 |
| Example 28 | | | 160 | 86 | 1230 | 1386 |
| Comparative Example 22 | | | 150 | 58 | 1754 | 1999 |
| Comparative Example 23 | | | 70 | 47 | 3706 | 3759 |
| Comparative Example 24 | | | 120 | 50 | 2743 | 2840 |
| Comparative Example 25 | | | 130 | 52 | 1854 | 2094 |
| Comparative Example 26 | | | 125 | 41 | 2654 | 2703 |
| Comparative Example 27 | | | 145 | 49 | 2002 | 2185 |

(continued)

| | Composite Particles Used | Positive Electrode Combination | Negative Electrode Combination | Capacity Density (mAh/g) | 3C/0.2C Cycle Characteristic (%) | Charge DCR (mΩ) | Discharge DCR (mΩ) |
|---|---|---|---|---|---|---|---|
| Comparative Example 28 | Comparative Example 21 | | | 155 | 54 | 1843 | 2084 |

*1. Powder obtained by mixing CNF-T (Mitsubishi Materials Corporation) and HS-100 (DENKI KAGAKU KOGYO KABUSHIKI KAISHA) at a mass ratio of 1:4 was used as the conduction aid for a positive electrode.

*2. The binder for a positive electrode was polyvinylidene fluoride (PVDF) L#7208 manufactured by KUREHA CORPORATION (% by mass was a value converted to a solid content).

*3. The conduction aid for a negative electrode was VGCF-H (SHOWA DENKO K.K.).

*4. The binder for a negative electrode was PVDF L#9130 manufactured by KUREHA CORPORATION (% by mass was a value converted to a solid content).

It has been found from Examples and Comparative Examples that cells using composite particles according to the present invention have remarkable improvements in the cycle characteristic determined by the discharge performance test.

**Industrial Applicability**

Positive electrode material for a lithium-ion secondary battery according to the present invention has excellent electron conductivity while using lithium-containing phosphate as a positive electrode active substance and overcoming its drawback. The lithium-containing phosphate should be heat-stable and highly safe, but has the drawback that its resistance is high. The positive electrode material of the present invention has resolved the drawback of the lithium-containing phosphate. As a result, it is possible to manufacture a highly safe lithium-ion secondary battery capable of maintaining stable charge and discharge characteristics over a long period of service life. A lithium-ion secondary battery using positive electrode material of the present invention can be suitably used for application such as an electric tool and a hybrid car, which require stable charge and discharge over a long period.

**Claims**

1. A process for producing composite particles, the process comprising:

   a first step of subjecting to surface treatment at least one carbon material selected from the group consisting of (i) a chain-like carbon material, selected from carbon black, acetylene black, and furnace black, and (ii) a carbon material produced by linking together said chain-like carbon material and a fibrous carbon material, selected from carbon nanotube, carbon nanofiber, vapor-grown carbon fiber, polyacrylonitrile-based carbon fiber, and pitch-based carbon fiber; the surface treatment being a method selected from an oxidation treatment, a method of using a surfactant and a method of using a polymer dispersant;
   a second step of dispersing and mixing the at least one surface-treated carbon material obtained in the first step in a solution having dissolved in a solvent a lithium ion (Li$^+$), a phosphate ion (PO$_4^{3-}$), and a metal ion other than the lithium ion, and a heat-degradable carbon source compound;
   a third step of heating the mixture as a solution state; and
   a fourth step of drying and further heating the mixture to form composite particles, wherein each particle of lithium-containing phosphate is coated with a carbon coating comprising the at least one carbon material and covering 90-100% of the particle surface.

2. A process for producing composite particles, the process comprising:

   a first step of subjecting to surface treatment at least one carbon material selected from the group consisting of (i) a chain-like carbon material, selected from carbon black, acetylene black, and furnace black, and (ii) a carbon material produced by linking together said chain-like carbon material and a fibrous carbon material, selected from carbon nanotube, carbon nanofiber, vapor-grown carbon fiber, polyacrylonitrile-based carbon fiber, and pitch-based carbon fiber; the surface treatment being a method selected from an oxidation treatment, a method of using a surfactant and a method of using a polymer dispersant;
   a second step of mixing the at least one surface-treated carbon material obtained in the first step, particles of lithium-containing phosphate, and a heat-degradable carbon source compound; and
   a third step of heating the mixture to form composite particles, wherein each particle of lithium-containing phosphate is coated with a carbon coating comprising the at least one carbon material and covering 90-100% of the particle surface.

3. The process for producing composite particles according to Claim 2, wherein the particles of lithium-containing phosphate are prepared by
   a step of heating a solution having dissolved in a solvent a lithium ion (Li$^+$), a phosphate ion (PO$_4^{3-}$), and a metal ion other than the lithium ion as a solution state to form the particles of lithium-containing phosphate and/or particles of a precursor thereof.

4. The process for producing composite particles according to any one of Claims 1 to 3, wherein the solvent is water, alcohol, or a mixed solvent of water and alcohol.

5. The process for producing composite particles according to any one of Claims 1, 3 or 4, wherein a method using a pressured and heated solvent is used for the third step of Claim 1 or the heating step of Claim 3.

6.  The process for producing composite particles according to any one of Claims 1 to 5, wherein the fibrous carbon material is a carbon nanotube with an average fiber size of 5 to 200 nm.

7.  The process for producing composite particles according to any one of Claims 1 to 6, wherein the chain-like carbon material is carbon black produced by linking, like a chain, primary particles with an average particle size of 10 to 100 nm.

8.  The process for producing composite particles according to any one of Claims 1 to 7, wherein the lithium-containing phosphate of the particles is $LiFePO_4$, $LiMnPO_4$, $LiMn_XFe_{(1-X)}PO_4$, $LiCoPO_4$, or $Li_3V_2(PO_4)_3$.

9.  The process for producing composite particles according to any one of Claims 1 to 8, wherein primary particles have an average size of 0.02 to 20 μm.

**Patentansprüche**

1.  Verfahren zur Herstellung von Verbundteilchen, wobei das Verfahren umfasst:

    einen ersten Schritt eines Oberflächenbehandelns wenigstens eines Kohlenstoffmaterials, ausgewählt aus der Gruppe bestehend aus: (i) einem kettenartigen Kohlenstoffmaterial, ausgewählt aus Industrieruß, Acetylenruß und Furnace-Ruß, und (ii) einem Kohlenstoffmaterial, das durch Miteinanderverbinden des kettenartigen Kohlenstoffmaterials und eines faserigen Kohlenstoffmaterials hergestellt ist, ausgewählt aus Kohlenstoff-Nanoröhrchen, Kohlenstoff-Nanofaser, aus der Dampfphase gewonnener Kohlenstofffaser (*Vapor Grown Carbon Fiber*), Kohlenstofffaser auf Basis von Polyacrylnitril und Kohlenstofffaser auf Basis von Pech; wobei die Oberflächenbehandlung ein Verfahren ist, das aus einer Oxidationsbehandlung, einem Verfahren eines Verwendens eines oberflächenaktiven Mittels und einem Verfahren eines Verwendens eines Polymer-Dispergators ausgewählt ist;
    einen zweiten Schritt eines Dispergierens und Mischens des wenigstens einen, in dem ersten Schritt erhaltenen oberflächenbehandelten Kohlenstoffmaterials in einer Lösung, bei der in einem Lösungsmittel ein Lithiumion ($Li^+$), ein Phosphation ($PO_4^{3-}$) und ein von dem Lithiumion verschiedenes Metallion und eine durch Wärme abbaubare Kohlenstoffquelle gelöst sind;
    einen dritten Schritt eines Erwärmens des Gemischs in einem Lösungszustand; und
    einen vierten Schritt eines Trocknens und weiteren Erwärmens des Gemischs, um Verbundteilchen auszubilden, wobei jedes Teilchen aus lithiumhaltigem Phosphat mit einer Kohlenstoffbeschichtung beschichtet ist, die das wenigstens eine Kohlenstoffmaterial umfasst und 90-100 % der Teilchenoberfläche bedeckt.

2.  Verfahren zur Herstellung von Verbundteilchen, wobei das Verfahren umfasst:

    einen ersten Schritt eines Oberflächenbehandelns wenigstens eines Kohlenstoffmaterials, ausgewählt aus der Gruppe bestehend aus: (i) einem kettenartigen Kohlenstoffmaterial, ausgewählt aus Industrieruß, Acetylenruß und Furnace-Ruß, und (ii) einem Kohlenstoffmaterial, das durch Miteinanderverbinden des kettenartigen Kohlenstoffmaterials und eines faserigen Kohlenstoffmaterials hergestellt ist, ausgewählt aus Kohlenstoff-Nanoröhrchen, Kohlenstoff-Nanofaser, aus der Dampfphase gewonnener Kohlenstofffaser (*Vapor Grown Carbon Fiber*), Kohlenstofffaser auf Basis von Polyacrylnitril und Kohlenstofffaser auf Basis von Pech; wobei die Oberflächenbehandlung ein Verfahren ist, das aus einer Oxidationsbehandlung, einem Verfahren eines Verwendens eines oberflächenaktiven Mittels und einem Verfahren eines Verwendens eines Polymer-Dispergators ausgewählt ist;
    einen zweiten Schritt eines Mischens des wenigstens einen, in dem ersten Schritt erhaltenen oberflächenbehandelten Kohlenstoffmaterials, von Teilchen eines lithiumhaltigen Phosphats und einer durch Wärme abbaubaren Kohlenstoffquelle; und
    einen dritten Schritt eines Erwärmens des Gemischs, um Verbundteilchen auszubilden, wobei jedes Teilchen aus lithiumhaltigem Phosphat mit einer Kohlenstoffbeschichtung beschichtet ist, die das wenigstens eine Kohlenstoffmaterial umfasst und 90-100 % der Teilchenoberfläche bedeckt.

3.  Verfahren zur Herstellung von Verbundteilchen nach Anspruch 2, wobei die Teilchen aus lithiumhaltigem Phosphat hergestellt werden durch:

EP 2 781 483 B1

einen Schritt eines Erwärmens einer Lösung, bei der in einem Lösungsmittel ein Lithiumion (Li⁺), ein Phosphation (PO₄³⁻) und ein von dem Lithiumion verschiedenes Metallion gelöst sind, in einem Lösungszustand, um die Teilchen aus lithiumhaltigem Phosphat und/oder Teilchen eines Vorläufers davon auszubilden.

4. Verfahren zur Herstellung von Verbundteilchen nach einem der Ansprüche 1 bis 3, wobei das Lösungsmittel Wasser, Alkohol oder ein Lösungsmittelgemisch aus Wasser und Alkohol ist.

5. Verfahren zur Herstellung von Verbundteilchen nach einem der Ansprüche 1, 3 oder 4, wobei ein Verfahren, das ein unter Druck stehendes und erwärmtes Lösungsmittel verwendet, für den dritten Schritt von Anspruch 1 oder den Erwärmungsschritt von Anspruch 3 verwendet wird.

6. Verfahren zur Herstellung von Verbundteilchen nach einem der Ansprüche 1 bis 5, wobei das faserige Kohlenstoffmaterial ein Kohlenstoff-Nanoröhrchen mit einer mittleren Fasergröße von 5 bis 200 nm ist.

7. Verfahren zur Herstellung von Verbundteilchen nach einem der Ansprüche 1 bis 6, wobei das kettenartige Kohlenstoffmaterial Industrieruß ist, der durch Verketten von Primärteilchen mit einer mittleren Teilchengröße von 10 bis 100 nm hergestellt ist.

8. Verfahren zur Herstellung von Verbundteilchen nach einem der Ansprüche 1 bis 7, wobei das lithiumhaltige Phosphat der Teilchen $LiFePO_4$, $LiMnPO_4$, $LiMn_xFe_{(1-x)}PO_4$, $LiCoPO_4$ oder $Li_3V_2(PO_4)_3$ ist.

9. Verfahren zur Herstellung von Verbundteilchen nach einem der Ansprüche 1 bis 8, wobei die Primärteilchen eine mittlere Größe von 0,02 bis 20 μm aufweisen.

Revendications

1. Procédé de production de particules composites, ledit procédé comprenant :

une première étape de soumission à un traitement de surface d'au moins un matière carbonée sélectionnée dans le groupe comprenant (i) une matière carbonée de type chaîne, sélectionnée entre noir de carbone, noir d'acétylène et noir de fourneau, et (ii) une matière carbonée produite en liant ensemble la matière carbonée de type chaîne et une matière carbonée fibreuse sélectionnée entre nanotube de carbone, nanofibre de carbone, fibre de carbone obtenue par croissance en phase vapeur, fibre de carbone à base de polyacrylonitrile et fibre de carbone à base de brai ; le traitement de surface étant un procédé sélectionné entre un traitement d'oxydation, un procédé d'utilisation d'un tensioactif et un procédé d'utilisation d'un dispersant polymère ;
une deuxième étape de dispersion et de mélange de ladite au moins une matière carbonée traitée en surface obtenue lors de la première étape dans une solution où sont dissous dans un solvant un ion de lithium (Li⁺), un ion de phosphate (PO₄³⁻) et un ion métallique autre que le ion de lithium, et un composé source de carbone thermodégradable ;
une troisième étape de chauffage du mélange à l'état de solution ; et
une quatrième étape de séchage et de nouveau chauffage du mélange pour former des particules composites, chaque particule de phosphate contenant du lithium étant enrobée d'un revêtement carbone comprenant ladite au moins une matière carbonée et couvrant de 90 à 100 % de la surface de particule.

2. Procédé de production de particules composites, ledit procédé comprenant :

une première étape de de soumission à un traitement de surface d'au moins un matière carbonée sélectionnée dans le groupe comprenant (i) une matière carbonée de type chaîne, sélectionnée entre noir de carbone, noir d'acétylène et noir de fourneau, et (ii) une matière carbonée produite en liant ensemble la matière carbonée de type chaîne et une matière carbonée fibreuse sélectionnée entre nanotube de carbone, nanofibre de carbone, fibre de carbone obtenue par croissance en phase vapeur, fibre de carbone à base de polyacrylonitrile et fibre de carbone à base de brai ; le traitement de surface étant un procédé sélectionné entre un traitement d'oxydation, un procédé d'utilisation d'un tensioactif et un procédé d'utilisation d'un dispersant polymère ;
une deuxième étape de mélange de ladite au moins une matière carbonée traitée en surface obtenue lors de la première étape, de particules de phosphate contenant du lithium et d'un composé source de carbone thermodégradable ; et
une troisième étape de chauffage du mélange pour former des particules composites, chaque particule de

38

phosphate contenant du lithium étant enrobée d'un revêtement carbone comprenant ladite au moins une matière carbonée et couvrant de 90 à 100 % de la surface de particule.

3.  Procédé de production de particules composites selon la revendication 2, où les particules de phosphate contenant du lithium sont préparées par
    une étape de chauffage d'une solution où sont dissous dans un solvant un ion de lithium ($Li^+$), un ion de phosphate ($PO_4^{3-}$) et un ion métallique autre que le ion de lithium, à l'état de solution pour former les particules de phosphate contenant du lithium et/ou des particules d'un précurseur correspondant.

4.  Procédé de production de particules composites selon l'une des revendications 1 à 3, où le solvant est de l'eau, de l'alcool ou solvant mixte eau et alcool.

5.  Procédé de production de particules composites selon l'une des revendications 1, 3 ou 4, où un procédé utilisant un solvant sous pression et chauffé est appliqué pour la troisième étape de la revendication 1 ou l'étape de chauffage de la revendication 3.

6.  Procédé de production de particules composites selon l'une des revendications 1 à 5, où la matière carbonée fibreuse est un nanotube de carbone avec une grandeur de fibre moyenne comprise entre 5 et 200 nm.

7.  Procédé de production de particules composites selon l'une des revendications 1 à 6, où la matière carbonée de type chaîne est du noir de carbone produit en liant comme une chaîne des particules primaires ayant une grandeur de particule moyenne comprise entre 10 et 100 nm.

8.  Procédé de production de particules composites selon l'une des revendications 1 à 7, où le phosphate contenant du lithium des particules est $LiFePO_4$, $LiMnPO_4$, $LiMn_xFe_{(1-x)}PO_4$, $LiCoPO_4$ ou $Li_3V_2(PO_4)_3$.

9.  Procédé de production de particules composites selon l'une des revendications 1 à 8, où les particules primaires ont une grandeur moyenne comprise entre 0,02 et 20 $\mu$m.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5226004 A
- JP 2005019399 A
- JP 2001126733 A
- JP 2003168429 A
- JP 2000509193 A
- JP 9134724 A
- JP 2002075364 A
- JP 2002110162 A
- JP 2004063386 A
- JP 2005123107 A
- JP 2006302671 A
- JP 2007080652 A
- JP 2010108889 A
- JP 2009503182 A

**Non-patent literature cited in the description**

- **URSULA DETTLAFF-WEGLIKOWSKA et al.** *Physica Status Solidi (B),* 2009, vol. 246 (11-12), 2482-2485
- **FEI DENG et al.** Chinese Science Bulletin. Science in China Pres, 2011, vol. 56, 1832-1835
- **MADHAV SINGH et al.** *Advanced Powder Technology,* 2011, vol. 22 (2), 284-289